(19) Europäisches Patentamt
European Patent Office
Office européen des brevets

(11) **EP 4 336 377 A1**

(12) **EUROPEAN PATENT APPLICATION**

(43) Date of publication:
**13.03.2024 Bulletin 2024/11**

(21) Application number: **22195171.8**

(22) Date of filing: **12.09.2022**

(51) International Patent Classification (IPC):
**G06F 16/29** (2019.01)   **G06F 16/9537** (2019.01)

(52) Cooperative Patent Classification (CPC):
**G06F 16/29; G06F 16/9537**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Technische Universität München 80333 München (DE)**

(72) Inventor: **Werner, Martin 85521 Riemerling (DE)**

(74) Representative: **Lucke, Andreas Boehmert & Boehmert Anwaltspartnerschaft mbB Pettenkoferstrasse 22 80336 München (DE)**

(54) **A METHOD AND SYSTEM FOR RANGE QUERY PROCESSING OF COMPLEX GEOMETRIC DATA**

(57)    A computer-implemented method for range query processing of complex geometric data in a database with respect to a query distance to a query object, said method comprising the steps of determining a buffered query object with respect to the query object, wherein a geometric footprint of the buffered query object is increased with respect to the query object based on the query distance; determining a buffered query filter for the buffered query object using a filter function, wherein the filter function comprises determining a mapping of an overlapped cell of a grid to a corresponding element of the buffered query filter, the overlapped cell being overlapped by the buffered query object on the grid; and filtering out complex geometric data objects in the database for which the filter function generates corresponding filter objects, which are not a subset of the buffered query filter and/or which have an empty intersection with the buffered query filter.

Fig. 4

**Description**

FIELD OF THE INVENTION

The present invention is in the field of range query processing. More precisely, the present invention relates to the processing of a range query with respect to a query distance for pruning a database of complex geometric data.

BACKGROUND

In the last decades, spatial data acquisition and management has gained importance due to several parallel developments. In particular, location-based services (navigation, geo-fencing, tracking, games, etc.) can be deployed to a wide audience (smartphones, GPS, mobile Internet, fleet management, Internet of Things), and the amount of data gathered is increasing with applications including traffic management, traffic analysis, logistics, HD mapping, autonomous driving, infrastructure planning, public transport, disaster response, and more.

This data can be considered complex geometric data which is data that is composed from a collection of simple geometric data (points, line segments), but with an agreement of how this composition is to be interpreted, which usually goes beyond the pure collection of the simple objects. For example, an ordered list of points may imply a temporal sequence of locations to describe a trajectory in space. The trajectory maybe constructed according to an agreement on how to interpret the ordered list of points, i.e. via piecewise interpolation of a path between the points to obtain a continuous geometric object.

However, with the increase of the amount and resolution of complex geometric data, it becomes increasingly difficult to retrieve matching complex geometric data for a given search query or to sort complex geometric data into clusters in a computationally efficient way. Currently, data management techniques largely rely on simple representations of spatial objects in terms of points, lines, and polygons which are internally represented by their minimum bounding rectangle (MBR) which represents the smallest axis-parallel rectangle that fully covers the object.

The MBR can be easily compared between different complex geometric objects by calculating an intersection between them. While the intersection of MBRs does not yield the intersection of the underlying polygons/trajectories, it provides an implication that, if the MBRs of two polygons do not intersect, so don't the polygons, potentially allowing to reduce the amount of relevant objects to a database query by a significant margin.

*M. Werner ("BACR: Set Similarities with Lower Bounds and Application to Spatial Trajectories")* discloses the use of Bloom filters to find potentially related trajectories in a dataset. Complex geometric database objects are overlaid over a spatial grid and the cells occupied by the complex geometric data are recorded by their associated string using a coordinate mapping known as geohash. The resulting string sequence is mapped onto a corresponding Bloom filter object by hashing the strings to obtain respective ones of the Bloom filter. Two Bloom filters can be compared by calculating the Jaccard distance between the two Bloom filters, defined as the quotient of the size of the intersection and the size of the union between the filters.

SUMMARY OF THE INVENTION

However, the known methods often return a large amount of objects which share some spatial similarity but may be ultimately not relevant to the search query. Hence, the pruning techniques of the prior art often result in a large number of complex geometric data objects that are highly dissimilar, e.g. in the case of MBR, when comparing spatial distances between trajectories traversing different routes in the same geographic area, such as routes through a city. Therefore, database management still relies on a large amount of processing power for directly comparing complex geometric objects, since calculating most similarity metrics on complex geometric data is computationally hard. Specifically, often all pairs of geometry elements need to be put into relation with each other, e.g. when calculating the Discrete Fréchet distance between trajectories, such that the algorithms are almost never sub-quadratic in computational complexity, with the special twist that a reduction of the number of geometry elements (e.g. points) fails due to a sampling dependence of the similarity metric.

In view of this state-of-the-art, the object of the invention is to provide a fast and robust method for range query processing that allows for retrieving relevant results with minimal computational resources during the query.

This object is solved by a method, a computer program and a system according to the independent claims. The dependent claims relate to preferred embodiments.

According to a first aspect, the invention relates to a computer-implemented method for range query processing of complex geometric data in a database with respect to a query distance to a query object. The method comprises the steps of determining a buffered query object with respect to the query object, wherein a geometric footprint of the buffered query object is increased with respect to the query object based on the query distance, and determining a buffered query filter for the buffered query object using a filter function, wherein the filter function comprises determining a mapping of an overlapped cell of a grid to a corresponding element of the buffered query filter, the overlapped cell being overlapped by the buffered query object on the grid. The method further comprises filtering out complex geometric data objects in the database for which the filter function generates corresponding filter objects, which are not a subset of the buffered query filter and/or which have an empty intersection with the buffered query filter.

The range query may be a query to the database to retrieve objects within a pre-defined spatial range of the query object. The range may be encoded as a distance metric which can be quantified using the query distance. The query object acts as the reference object to which the complex geometric data in the database is compared based on the given query distance. The query object maybe one of the complex geometric data objects in the database or an externally supplied query object, e.g. for clustering purposes or for performing a similarity search. The query object may be associated with an agreement on how the data is to be interpreted and may imply operations to generate a geometric object based on a provided query object. For example, the query object maybe provided as a number of points, and an agreement may imply that consecutive points are to be connected by edges (line segments) to form a continuous geometric object as the query object.

The method may determine an area occupied by the buffered query object around the query object and may determine an overlap of the buffered query object with cells of the grid. The buffered query object may encode a geometrical representation of the range query based on the query distance, e.g. a polygon around the query object based on the query distance which encloses the points in space for which the range query can be fulfilled. Accordingly, the overlapped cells may represent the subset of cells of the grid for which the range query can be fulfilled. Identifiers of the overlapped cells of the grid may be mapped onto a buffered query filter, which is preferably a probabilistic data structure, which can be smaller in memory than a collection of the identifiers of the overlapped cells. The buffered query filter may not allow for an unambiguous mapping back to the overlapped cells, but may rather represent a fingerprint of the buffered query object.

The buffered query filter may subsequently be compared to filter objects, which can be obtained for complex geometric data objects in the database using the same filter function, by determining whether the filter objects generated from the complex geometric data in the database contain elements which are not part of the buffered query filter. In this case, it can be safely assumed that the respective complex geometric data object does not overlay the buffered query object and may accordingly be discarded in a search for complex geometric data within the query distance from the query object. If an intersection of the buffered query filter and the filter object for the complex geometric data object is empty, it can be safely assumed that no element of the complex geometric data object intersects the buffered query object, such that it can be inferred that the minimum distance between the query object and the complex geometric data object is larger than the query distance.

Since the filter objects can be comparatively small and do not need to contain information for reconstructing the underlying complex geometric data, the comparison can require few computational resources and may in particular rely on simple bit comparisons. At the same time, the fingerprint generated by the filter function for the buffered query object can retain the property that filter objects, which are not a subset of the buffered query filter, can be safely excluded from the range query with respect to the query object, such that the remaining complex geometric data is likely to have a high geometric similarity to the query object, e.g. when compared to MBR based pruning. Hence, even when the object of the range query is ultimately based on a computationally expensive distance metric, the reduction of the number of relevant complex geometric objects using the method of the first aspect may significantly increase the efficiency of the search algorithm.

In preferred embodiments, the query object is a complex geometric object, which in particular comprises a collection of points and/or edges and preferably corresponds to a trajectory.

For example, the query object may be a trajectory and the range query may be a query for finding trajectories in the database within a given Continuous Fréchet distance of the query object. The Fréchet distance maybe understood as the problem of finding the shortest possible leash when given two trajectories of a man and his dog on a walk, and is considered computationally hard, as it generally relies on a pair-wise comparison of the relative distance between most points of the trajectories. Using the method according to the first aspect, the number of exact trajectory comparisons for determining the Fréchet distance may be greatly reduced.

The method comprises generating a buffered query object, whose geometric footprint of the buffered query object is increased with respect to the query object based on the query distance.

In preferred embodiments, the buffered query object approximates the set of points for which the smallest distance to the query object is smaller or equal to the query distance at least for a portion of the query object.

The buffered query object may geometrically encode the distance metric, e.g. the Fréchet distance, by defining the set of points/coordinates which would overlap with any complex geometric data object for which the condition can be fulfilled that the Fréchet distance to the query object is smaller than the query distance. In other words, if a trajectory lies within a polygon defined by the set of points for the query object, it is likely within a Fréchet distance smaller than the query distance, at least for a portion of the query object.

The skilled person will appreciate that for each geometry element (e.g. points, edges, etc.) of a query object, different query distances maybe defined to perform certain search queries, which need not be a Fréchet distance based query. For example, each point/edge of a trajectory may be associated with error bars related to the accuracy of the coordinates associated with the geometry element (e.g. measurement errors), and the query distance at each point/line may be function of the error bars and/or a geometry element specific query distance in order to define a custom search query including supposed measurement errors for the geometry elements of the query object. However, in the following, mostly a singular query distance for all geometry elements of the query object will be considered to illustrate the invention with examples of common distance metrics, such as the Fréchet distance or the Hausdorff distance.

For a trajectory, determining the buffered query object may comprise determining a polygon around the trajectory, which may approximate a sleeve around the trajectory, whose geometric boundaries are spaced by the query distance from the closest point of the trajectory. The buffered query object may be based on the query object including additional geometric information implied for the query object, e.g. including edges between points of the query object, such that determining the buffered query object may include connecting points of the query object by edges, or vice-versa.

In preferred embodiments, the buffered query object geometrically approximates a sleeve around the query object, wherein the geometric boundary of the sleeve is spaced by the query distance from the query object.

In an implementation, a processing system may process the geometry elements of the query object, such as the points and/or edges defining a query trajectory, and may determine a corresponding buffered portion of the buffered query object for each geometry element of the query object. As an example, the processing system may iterate over each point of a trajectory and define approximated circles with a radius corresponding to the query distance around each point as well as approximated rectangles for edges connecting the points of the trajectory by the query distance, such as to generate an approximated sleeve around a trajectory.

Based on the buffered query object, the method can determine the buffered query filter based on an overlap between the buffered query object and a grid.

In preferred embodiments, determining the buffered query filter comprises determining a rasterized sketch of the buffered query object by determining cells of the grid which are overlapped by the buffered query object.

The grid may be any suitable segmentation of a coordinate system to attribute identifiers to respective cells of the grid. The grid need not be a regular grid, but cells of arbitrary shape may in principle be associated with geometric coordinates according to arbitrary functions or look-up tables. Preferably, the overlapped cells may be determined based on a function of the coordinates of the geometry elements of the buffered query object, in order to reduce a computational burden for determining the rasterized sketch. For example, the cells may be defined by a suitable division of Cartesian or spherical coordinates, e.g. latitude and longitude coordinates, such that for a given set of coordinates, the associated cell may be calculated according to a coordinate based function. The cells may be two-dimensional to map two-dimensional coordinates in space, but may equally track three(or more)-dimensional coordinates in any suitable division, e.g. to take into account motion over different floors of a building, wherein the height dimension may discretized according to the respective floor height.

In preferred embodiments, the grid comprises a grid of a geographic surface and/or a geographic volume.

Each cell of the grid may be associated with respective geographic coordinates, such as a center point, or the coordinates of a vertex of the cell, which may also be considered identifiers of the respective cell. The grid may be relative to a geodetic datum, such as the World Geodetic System or the International Terrestrial Reference System and Frame, and may provide a mapping of geographic coordinates to respective cells of the grid.

In preferred embodiments, cells of the grid are associated with respective geographic locations.

The cells may each define an associated d-dimensional geographic volume, which may be given by an interval of coordinates associated with the respective cell, in which the cell may overlap with a query object.

In preferred embodiments, each cell of the grid is associated with a coordinate interval, in particular associated with an interval of latitude coordinates and an interval of longitude coordinates.

The overlap between the buffered query object and the grid may then be calculated, e.g. by calculating an overlap between the polygon defining the buffered query object and the cells of the grid, such as by coordinate comparison as part of the (parallelizable) iteration over all points discussed above. Additionally or alternatively, the determining of the buffered query filter and the determination of overlapped cells may be combined in embodiments, e.g. by determining overlapped cells for the query object and increasing the resulting rasterized sketch of the query object by determining adjacent cells to the overlapped cells based on the query distance and a size of the cells.

Each of the cells may be identified by an associated identifier, such as a unique string, to represent the cells overlapped by the buffered query object in memory.

In preferred embodiments, the cell of the grid is identified by a geographical identifier through a hashing function, in particular by a geocode.

The hashing function may map the geometric coordinates associated with each cell to a (bit-) string of a predefined length, which may be unique for each cell of the grid, such as to generate a geocode.

Generally, coordinates in a given d-dimensional space may be mapped onto geographical identifiers (e.g. strings) by a mapping of the d-dimensional space onto a one-dimensional discrete space. Space-filling curves such as the Hilbert curve or the Z-curve can be used for this, projecting a space cell onto the time in the curve, the Z-curve being relatively easy to calculate.

From an implementation perspective, the Z-curve coding can be generated by splitting the space into square (cubic, etc.) cells and bit-interleaving the associated cell indices written in binary. The resulting bit vector can be coded into a string using e.g., BASE32, which is then widely known as the Geohash. The geohash cell of a prefix of a string is a rectangle containing the geohash cell as well as all other geohash cells of the same prefix.

The geohash may then be used as the geographical identifier of the overlapped cell and may be mapped onto a corresponding element of the buffered query filter.

In preferred embodiments, the filter function maps the geographical identifier associated with the overlapped cell or an identifier based on the geographical identifier to the element of the buffered query filter.

The skilled person will appreciate that none of the buffered query object, the rasterized sketch and the geographical identifiers of the overlapped cells need to be held in memory for implementing the method. Rather, the method may directly compute, for each geometry element of the query object, the associated element of the buffered query filter, e.g. as part of an iteration or parallelized processing of all geometry elements of the query object. For example, the method may iterate over all points of a trajectory and determine, for each point, the cells overlapped by an (approximated) circle around the point, and the elements of the buffered query filter associated with the overlapped cells may be recorded for that point based on the result. Additionally or alternatively, the method may iterate over all edges of the trajectory and determine, for each edge, the cells overlapped by a corridor around the edge, and the elements of the buffered query filter associated with the overlapped cells may be recorded for that point based on the result. Hence, the buffered query object and/or the overlapped cell(s) may be intermediate results of an algorithm for determining the buffered query filter which may never be held in memory as an independent data object. Rather, the skilled person will appreciate that the mapping may directly map coordinates to an element of the buffered query filter using the filter function, and the determining of overlapped cells may be an implicit intermediate result of the filter function.

In preferred embodiments, the method further comprises determining, for each cell of the grid overlapped by the buffered query object, the mapping to the corresponding element of the buffered query filter, and updating the buffered query filter based on the result of the mapping.

The buffered query filter may be updated by updating the element mapped by the overlapped cell, e.g. by updating a value of the element of the buffered query filter which is associated with a corresponding geographical identifier. For example, the geographical identifier of the cell may be mapped to an index of the buffered query filter through a hash function, and the element of the buffered query filter at said index may be updated, e.g. increased or set.

In preferred embodiments, updating the buffered query filter comprises setting a bit of the buffered query filter, if the bit had not been set earlier.

As an example, the buffered query filter may be initialized as an empty buffered query filter, which may be composed of only ones or zeros. A geographical identifier of the overlapped cell may be mapped to an index of the buffered query filter, and the bit value at the index may be set to one (if the empty buffered query filter was composed of zeros) or zero (if the empty buffered query filter was composed of ones). As a result, the bit of the buffered query filter at the index associated with the overlapped cell may be considered "set".

In preferred embodiments, the mapping of the cell of the grid overlapped by the buffered query object to the element of the buffered query filter comprises calculating a hash function of an identifier which is associated with the cell overlapped by the buffered query object.

The hash function may map the identifier to an element of the buffered query object, such as an index of a bit or a sequence of bits of the buffered query filter.

In preferred embodiments, the method further comprises determining an index of the buffered query filter based on the output of the hash function.

The hash function need not be a bijective function and the output of the hash function may therefore not unambiguously map to a specific cell of the grid. Rather, the mapping may be generally understood as a mere functional relation, e.g. merely requiring that an input maps unambiguously to an associated output. However, the relation does not need to be injective, i.e. it may not be required that the output is only obtained for one unique input, but the same output may be obtained for different inputs.

In preferred embodiments, the mapping is non-injective and allows for collisions of the output of the mapping with respect to the expected input based on the database and/or the query object.

As a result, the buffered query object may be a comparatively small object in memory, such that the comparison of the buffered query filter with filter objects of the database objects may be performed with comparatively few computational resources. For example, the buffered query filter may be a data object with a size of 64 bit, 96 bit, 128 bit, 192 bit, 256 bit, 512 bit or 1024 bit, such as to optimize a memory footprint and processing of the buffered query filter by a processing system based on an internal 32 bit or 64 bit architecture.

In some embodiments, the size of the buffered query filter is specified as a multiple of 4 Kbyte in line with common page sizes in modern computers.

The hash function may select the element of the buffered query filter substantially randomly based on the identifier of the overlapped cell, e.g. the results of the hash function may be uniformly distributed based on the expected input identifiers. Generally, for a buffered query filter with $N$ elements (e.g. $N$ bits) the chance for collisions of different identifiers at the same element may then be near $1/N$.

To reduce the chance of collisions, each identifier may be hashed $k$ times, e.g. via different hash functions, reducing the chance of two identifiers producing the same buffered query filter elements.

In preferred embodiments, the filter function comprises determining a plurality of elements of the buffered query filter for each overlapped cell.

The skilled person will appreciate that determining the plurality of elements may in principle only require a single evaluation of a hash function and the multiple elements may be determined based on the output of the hash function. For example, a hash function output of $M$ bits of an input $x$ may be used to generate multiple indices $h_i$ by splitting the hash function output into two portions $h_{zow}$, $h_{high}$ of length $M/2$ and determining multiple hashes based on a function of the two portions, e.g. according to $h_i(x) = h_{low}(x) + i \cdot h_{high}(x) \bmod 2^N$, $i \in \{1 \ldots k\}$. However, the identifier may also be hashed multiple times, e.g. using different hash functions, to obtain multiple elements of the buffered query filter for one overlapped cell of the grid.

The resulting buffered query filter may be equivalent to a Bloom filter of all identifiers of the overlapped cells of the rasterized buffered query object.

In preferred embodiments, the buffered query filter is a Bloom filter for the buffered query object based on the cells of the grid overlapped by the buffered query object.

The size of the Bloom filter as well as its configuration (e.g. number of hashes $k$ per identifier of overlapped cell) may be optimized to maximize the ability to distinguish between complex geometric data objects of the database. For example, the Bloom filter may be configured such that substantially half of the elements of the buffered query filter and/or of the filter object for an average complex geometric data object in the database are set by the filter function.

In some embodiments, the database is configured to generate filter objects for all complex geometric data objects in the database in advance using the filter function. Hence, at the time of the range query, a processing system may merely need to determine the buffered query filter and subsequently compare it to the pre-generated filter objects in the database.

The filter objects generated using the filter function for complex geometric data in the database may be compared to the buffered query filter by checking, whether each filter object is a subset of the buffered query filter. For example, the method may comprise checking whether all elements of the filter object are also present in the buffered query filter (e.g. set by the filter function), implying that the corresponding complex geometric data is likely to overlap the buffered query object, such that the range query condition based on the query distance would be fulfilled for the query object.

The subset comparison maybe a bit-wise comparison of the filter object and the buffered query filter, e.g. checking for each bit set in the filter object ("one"), whether the corresponding bit of the buffered query filter at the same index is not set ("zero"). Usually, not all bits of the filter object and the buffered query filter need to be compared to determine, whether a filter object is a subset of the buffered query filter. For example, the processing system may stop comparing the filter object and the buffered query filter early once a subset requirement can no longer be fulfilled for the filter function, e.g. once a "zero" of the buffered query filter is found for a "one" of the filter object. As a further example, the method may compare respective fractions of zeros/ones in a portion of the buffered query filter and the filter objects to exclude, whether a filter object can be a subset of the buffered query filter.

The complex geometric data objects filtered out in this way may be discarded, while the other complex geometric data objects may be retained for further range query processing. For example, a range query may include an initial MBR based pruning, which may only retain complex geometric data objects, for which the respective MBR intersects with the MBR of the query object, followed by a refinement of the results based on the method according to the first aspect. The remaining complex geometric data objects may subsequently be compared to the query object using algorithms which are comparatively expensive with respect to processing resources, e.g. by calculating the exact Fréchet distance between the query object and the retained complex geometric data objects or by directly comparing the overlapped cells of the query object and/or the buffered query object with cells of the grid overlapped by the retained complex geometric data objects to further filter false positives.

Additionally or alternatively, it can be determined, whether the intersection between the filter object and the buffered query filter is empty, e.g. based on a logic AND operation and/or by determining, for each "one" of the filter object, whether the corresponding element of the buffered query filter is "zero", or vice-versa. In this case, an inference on the minimal distance between the query object and the complex geometric database object can be made, e.g. that their minimum distance is greater than the query distance.

In some embodiments, the complex geometric data objects in the database may be filtered into respective sets of complex geometric data likely overlapping with the buffered query object, likely intersecting the buffered query object, and not intersecting the buffered query object, based on a comparison of the buffered query filter object and the filter object of the complex geometric data objects in the database.

The skilled person will appreciate that for each complex geometric object in the database a plurality of filter objects can be generated, and may be held in the database for performing different search queries. For example, the filter function may be applied to the raw data of the complex geometric object in the database or may be applied to complex geometric objects constructed from the raw data of the complex geometric data in the database. In an example where the complex geometric data is stored as a collection of points, the filter function may be applied only to the points recorded for the complex geometric data in the database, or may be applied to the points as well as the edges connecting linked points in the raw data. The first option may take account of a sparse representation of the complex geometric data, whereas the latter may take into account the underlying continuous geometric object represented by the raw data. Both options may be combined in some embodiments, e.g. two filter objects may be generated for each complex geometric data object in the database, one based on the raw data, and an additional object based on the continuous geometric data object constructed from the raw data, which may be generated as part of the same operation on the complex geometric data object. For example, a processing unit may process the points and edges of a complex geometric data object in parallel to obtain respective intermediate filter objects and may subsequently combine the respective intermediate filter objects, e.g. using the OR operation, for obtaining a combined filter object as well as the intermediate filter object based on the points alone.

Further, the database may retain multiple filter objects for the same complex geometric object in the database, which may have been generated using different filter functions, e.g. using different effective grid segmentations or filter objects of different memory size. Accordingly, given a certain range query for a given query object, a suitable set of filter objects in the database can be used to optimize the range query, e.g. based on a spatial extent and/or resolution of the query object.

According to a second aspect, the invention relates to a database system, the database system comprising a database of complex geometric data and a processing system. The processing system is configured to determine a buffered query object with respect to a query object, wherein a geometric footprint of the buffered query object is increased with respect to the query object based on a query distance, and to determine a buffered query filter for the query object using a filter function, wherein the filter function comprises determining a mapping of an overlapped cell of a grid to a corresponding element of the buffered query filter, the overlapped cell being overlapped by the buffered query object on the grid. The processing system is further configured to filter out complex geometric data objects for which the filter function generates filter objects, which are not a subset of the buffered query filter and/or which have an empty intersection with the buffered query filter.

The database system may implement the method according to the first aspect or any combination of its embodiments.

The processing system may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like.

In preferred embodiments, the database is configured to generate and/or maintain filter objects for each of the complex geometric data objects held in the database using the filter function in advance.

For example, in case of trajectories submitted live from a mobile phone, a trajectory may gradually grow, and an associated filter object in the database may be maintained by increasing the number of ones without "recalculating" the filter object. For example, when a new point is added to the complex geometric object, the additional overlapped cells may be determined and the corresponding elements of the filter object/buffered query filter may be computed to update the filter object/buffered query filter in the database.

When the filter objects are generated for finished trajectories in the database, the properties of the filter function/ filter object may be optimized for look-up with respect to similar complex geometric objects, e.g. with respect to the size of the filter object, the segmentation of the grid, a combination thereof or other properties of the filter function. In the case of a gradually updated complex geometric object, it may be advantageous to initialize a larger filter object, such as to anticipate future additions of elements, when the complex geometric object grows. Additionally or alternatively, optimal filter objects may be generated regularly and/or depending on an updated size of the maintained complex geometric object.

According to a third aspect, the invention relates to a non-transitory medium comprising machine-readable instruction, which, when executed by a processing system, implement a method according to the first aspect, or a system according to the second aspect.

DETAILED DESCRIPTION OF EMBODIMENTS

The features and numerous advantages of the methods and system according to the present invention will best be understood from a detailed description of preferred embodiments with reference to the accompanying drawings, in which:

Fig. 1A, 1B     schematically illustrate examples of complex geometric data in the context of two-dimensional trajectories;

Fig. 2A, 2B     schematically illustrate further examples of complex geometric data in the context of two-dimensional trajectories;

Fig. 3     illustrates a flowchart of an example of a method for range query processing of complex geometric data in a database with respect to a query distance;

Fig. 4     schematically illustrates steps involved in generating a buffered query filter according to an example;

Fig. 5     schematically illustrates steps involved in generating a filter object for an example trajectory according to an example; and

Fig. 6A, 6B     schematically illustrate a subset operation for two different filter objects with the same buffered query object.

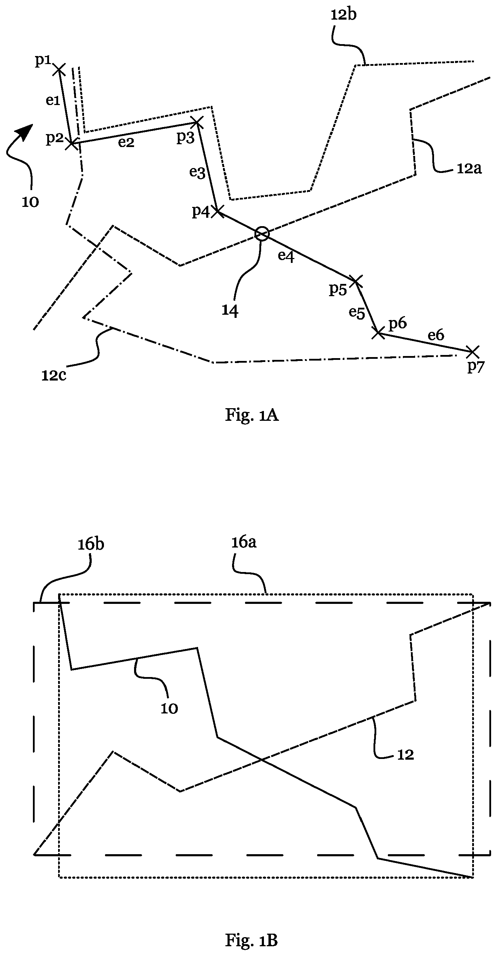

Fig. 1A schematically illustrates examples of complex geometric data in the context of two-dimensional trajectories. A query object 10 forms a trajectory (solid line) and is composed of a plurality of points p1-p7 (indicated by respective crosses along the solid line), which are interconnected by a plurality of edges ei-e6. The query object 10 may be retained in machine-readable storage as an (ordered) collection of the points p1-p7, e.g. as a list of coordinate pairs, and/or as a collection of the edges ei-e6 or in any other form.

A first example trajectory 12a (illustrated with dashed line) intersects the query object 10 at an intersection 14, but features different start and end points with respect to the query object 10. A second example trajectory 12b (illustrated with dotted line) does not intersect the query object 10, but may be considered geometrically similar to the portion of the query object 10 associated with points p1-p4. A third example trajectory 12c (illustrated with dashed line with intermittent dots) features substantially identical start and end points compared to the query object 10, but can be considered to differ in shape from the query object 10.

For all of the previous example trajectories 12a-12c, it is generally difficult to geometrically distinguish them from the query object 10 in a computationally efficient way. In particular, the most prevalent strategies for comparison of complex geometric objects, e.g. a comparison of start and end points or a MBR based pruning, may indicate a high degree of similarity of the example trajectories 12a-12c to the query object 10.

For example, as shown in Fig. 1B, an MBR 16a (illustrated with dashed rectangle) of the query object 10 may intersect and share a substantial overlap with an MBR 16b (illustrated with dotted rectangle) of the first example trajectory 12a. As a result, if the object of a range query is to find trajectories which traverse substantially the same path, e.g. as defined by a certain threshold of the respective Fréchet distance or the Hausdorff distance (or dynamic time warping, Edit Distance for Real sequences, ERP, etc.), the result of comparing the MBR 16a of the query object 10 and the MBRs 16b of the example trajectories 12a-c or their start and end points may include a large number of unrelated trajectories, such as the example trajectories 12a-12C.

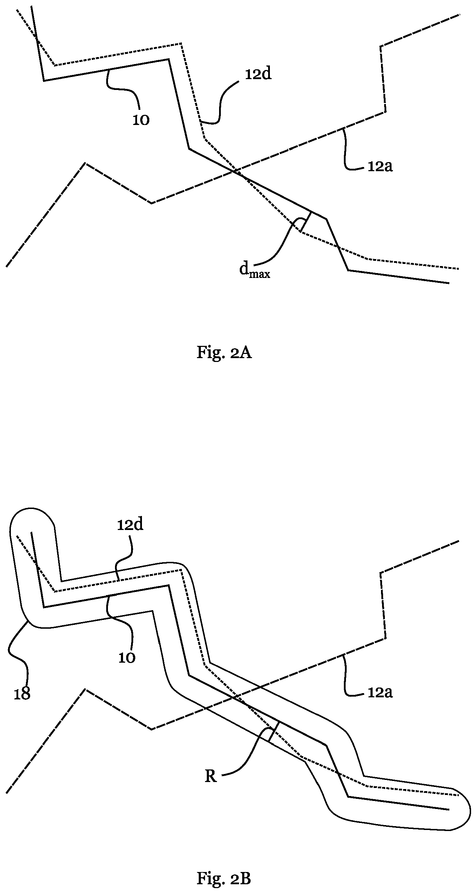

Fig. 2A schematically illustrates further examples of complex geometric data in the context of two-dimensional trajectories, including the query object 10 (solid line) and the first example trajectory 12a (dashed line) illustrated in Figs. 1A, 1B as well as a fourth example trajectory 12d (dotted line). The fourth example trajectory 12d does not share common vertices with the query object 10, but is geometrically similar with respect to a shape of the respective trajectory in space, wherein a greatest minimum geometric distance $d_{max}$ between the points of the query object 10 and the fourth query object 12d is comparatively small. In other words, all points of the fourth example trajectory 12d can be considered to fulfill the condition that the shortest distance of any point of the corresponding continuous trajectory to the query object 10 is smaller or equal to $d_{max}$.

This property can be useful if a dataset of complex geometric objects is to be narrowed down as part of a range query based on the query object 10 and a query distance $R$. For example, given a database of objects D, a range query with respect to a complex geometric object $P$ (e.g. the query object 10), a distance function $d$ of complex geometric objects, and distance bound R may be designed to retrieve all complex geometric objects $G$ of the database $D$, $G \in D$, for which $d(G, P) \leq R$. The query distance $R$ may be a threshold for a complex distance metric $d(G, P)$, such as a Fréchet distance $d_{\text{Fréchet}}(G, P)$, of the complex geometric object $G$ to the query object 10 ($P$), such that all complex geometric objects $G$ retrieved by the range query should have a Fréchet distance to the query object 10, which is smaller than $R$, i.e. $d_{\text{Fréchet}}(G, \text{P})) \leq R$.

Then, for the purpose of performing the range query, database objects $G$ fulfilling the condition that the shortest distance to the query object 10 is smaller or equal $R$ for all points of the complex geometric object $G$, e.g. $d_{max} \leq R$, are likely to be promising candidates for the range query, since the Fréchet distance is a distance metric, which is always at least as large as this simple "maximum minimal distance" $d_{max}$.

Hence, instead of computing a complex distance metric $d(a, b)$, such as the Fréchet distance, of all complex geometric objects $a$ in the database D to a reference object $b$ (e.g. the query object 10), it may be determined in a first step, whether the maximum of a simple distance metric $d_{simple}(a_i, b_j)$ between the complex geometric objects $a$, $b$ with

sample points $a_i$, $b_j$ is smaller than the query distance $R$, i.e. $\max\limits_{i,j} d_{simple}(a_i, b_j) \leq R$ , and filtering out complex geometric objects b, which do not obey this requirement, such as to reduce the number of calculations of the complex distance metric $d(a, b)$.

This procedure can reliably reduce the database objects considered in the range query for distance metrics $d$ and $d_{simple}$ fulfilling the criterion:

$$\max\limits_{i,j} d_{simple}(a_i, b_j) \leq d(a, b) \qquad (1)$$

The metric $\max\limits_{i,j} d_{simple}(a_i, b_j)$ can be the greatest minimum geometric distance $d_{max}$ illustrated in Fig. 2A, and may be considered the maximum of the smallest distance between the complex geometric objects $a$, $b$ for all geometry elements $a_i$, $b_j$ including corner points, edges, etc.. It is noted that the shortest distance can be usually determined or at least approximated using a finite subset of points on these complex geometries, which each in principle represent an infinite set of points, and the shortest distance maybe determined by finding the critical points $a_i$, $b_j$ associated with maximum minimal distance, which may not necessarily be the same points that have been used to store the geometries.

In this case, the criterion in Eq. (1) is sometimes referred to as the Max-Dist-Lower-Bounded criterion and applies to most complex distance metrics $d(a, b)$ between complex geometric objects $a$, $b$, such as the Fréchet distance or the Hausdorff distance.

If the criterion in Eq. (1) is fulfilled, then once it is determined that the metric $\max\limits_{i,j} d_{simple}(g_i, p_j)$ between two complex geometric objects $G$, $P$ is larger than $R$, one can safely assume that the complex distance $d(G, P)$ between these complex geometric objects $G$, $P$ is also greater than $R$. Thus, the database object $G$ can be removed from a list of potential candidates for the range query, which is intended to find complex geometric objects $G$ for which the distance metric $d(G, P)$ is smaller than $R$.

However, it is usually computationally expensive to determine $\max\limits_{i,j} d_{simple}(g_i, p_j)$ , i.e. $d_{max}$ in the example of Fig. 2A, as it in principle requires an element-wise comparison of all geometry elements of the respective trajectories. Hence, it is often inefficient to search, cluster or sort a large database of complex geometric data on the basis of geometric distances between database objects.

Fig. 2B shows a geometric representation of the set of points for which the minimum geometric distance $R$ from the query trajectory is smaller or equal to the distance from the fourth example trajectory 12d. The set of points may form a polygon 18 around the query object 10, wherein the boundaries of the polygon 18 may be spaced by the geometric distance $R$ from the closest point of the query object 10. The polygon 18 may be considered to form a sleeve symmetrically around the query object 10, which may define a corridor having a width of two times the geometric distance $R$. The polygon 18 may be an implementation of the R-Buffer of the complex geometric object $G$ which may be given by the set of all points in space, where the point-object distance inf $d(g, p)$ for all points $g \in G$ is smaller or equal to $R$:

$$BUFFER(G, R) = \left\{ p: \inf\limits_{g \in G} d(g, p) \leq R \right\} \qquad (2)$$

The skilled person will appreciate that the $BUFFER(G, R)$ will be approximated in practice, e.g. by computing the points of the polygon 18, which may e.g. approximate rounded parts of the $BUFFER(G, R)$ with a limited number of edges. Moreover, the *BUFFER(G, R)* can be generated in different forms/ways, e.g. by determining a representative subset of the points *p* or by approximating the *BUFFER*(*G, R*) with a polygon 18 as shown in Fig. 2B. This inaccuracy in actually representing the described region is, however, irrelevant for pruning database objects for a range query, if correctly constructed, as it may merely translate to additional candidates if the approximation is consistently done into the right direction (smaller than R or larger than R) depending on whether the predicate "within" or "empty intersection" is going to be used.

By determining whether all points (and/or edges) of a complex geometric data object 12a-12d are located inside of the polygon 18, a processing system may filter complex geometric objects *G* in a database *D,* which may be similar to the query object 10 with respect to a range query based on the geometric distance *R* by which the geometric footprint of the polygon 18 is increased with respect to the query object 10 (also referred to as buffer radius *R*).

For the Fréchet Distance as an exemplary distance metric *d*(*g, p*), this is a simple consequence of its definition, namely that the leash must connect any point outside the polygon 18 to one point of the query trajectory 10. But since the minimal distance from an arbitrary point outside the polygon 18 to the query object 10 is larger than *R* by definition of the polygon 18, the Fréchet distance must equally be larger than *R.*

However, the direct geometric comparison of the polygon 18 with complex geometric data in a database is generally computationally expensive.

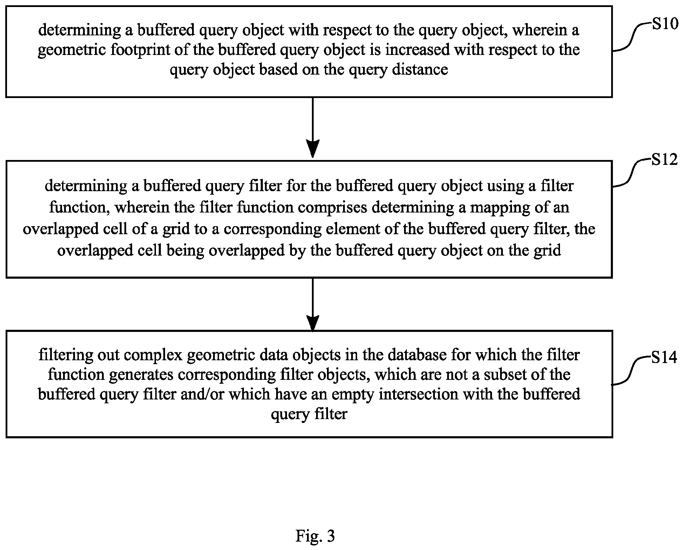

Fig. 3 illustrates a flowchart of an example of a method for range query processing of complex geometric data in a database with respect to a query distance. The method comprises determining a buffered query object with respect to the query object 10, wherein a geometric footprint of the buffered query object is increased with respect to the query object 10 based on the query distance (S10), and determining a buffered query filter for the buffered query object using a filter function, wherein the filter function comprises determining a mapping of an overlapped cell of a grid to a corresponding element of the buffered query filter, the overlapped cell being overlapped by the buffered query object on the grid (S12). The method further comprises filtering out complex geometric data objects in the database for which the filter function generates corresponding filter objects, which are not a subset of the buffered query filter and/or which have an empty intersection with the buffered query filter (S14).

Hence, instead of directly comparing the polygon 18 generated for the query object 10 based on the query distance *R* with complex geometric data in the database, an implementation of the method may determine cells of a grid overlapped by the polygon 18, which may transform the complex geometric structure of the polygon 18 into a set of overlapped cells. Identifiers of the overlapped cells of the grid may be mapped to the buffered query filter which may represent a fingerprint of the polygon 18 generated from the set of identifiers.

As an example, the geohashes of geographical cells overlapped by the polygon 18 may be determined, and the geohashes may be mapped to indices of a binary filter object, which are then set, to construct a buffered query filter based on the query object 10 and the query distance.

The buffered query filter may allow to quickly decide, whether a database trajectory *G* fully overlaps or intersects the buffered query object, such that no points are farther away from the nearest point of the query object 10 than the given query distance.

The probabilistic encoding of the buffered query object into the buffered query filter may introduce errors, but certain statements can frequently be extracted: If the probabilistic representation of the buffered query object provided by the buffered query filter has a zero in a place where the database representation of a trajectory 12-d has none, it can be concluded that at least one point of the database trajectory 12a-d is farther away than the query distance. Similarly, if the intersection of this buffer region with the database trajectory is empty, it can be concluded that no point of the database trajectory 12a-d is within the query distance.

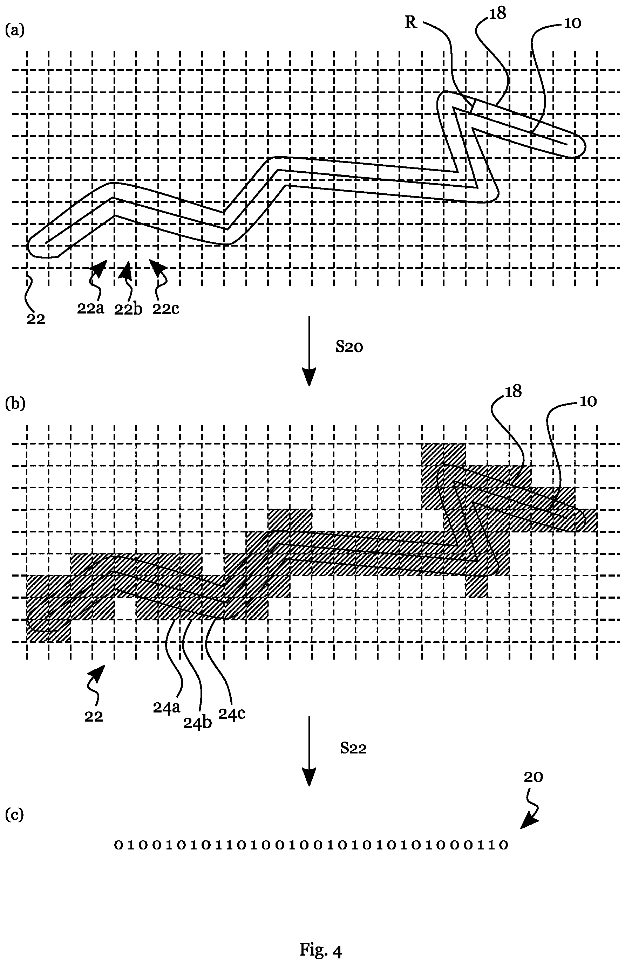

Fig. 4 schematically illustrates steps involved in generating a buffered query filter 20 according to an example. In a first step, schematically illustrated in subfigure Fig. 4(a), a buffered query object is determined by calculating a polygon 18 approximately delimiting the set of points spaced from the query object 10 by a distance smaller than or equal to the query distance *R* of the range query, such that it approximates boundaries of the *BUFFER*(*G, R*). In a practical implementation, a processing unit may calculate, for each point of the query object 10, an approximated circle of radius *R* and, for each edge of the query object 10, an approximated corridor spaced by the query distance R on both sides, and the resulting collection of geometric objects may describe the polygon 18 implementing the buffered query object 20.

The polygon 18 can be overlaid on a grid 22, which may segment a coordinate space into cells 22a-c. In the example of Fig. 4, the grid 22 is a regular grid, such that cells 22a-c may segment the space into evenly spaced intervals of coordinates. For example, the cells 22a-c may be evenly spaced intervals of latitude and longitude coordinates associated with each cell 22a-c. Each cell 22a-c may be identified by a unique identifier, e.g. a string associated with a geohash, to deterministically label each segment of the coordinate system.

In a second step, schematically illustrated in subfigure Fig. 4(b), overlapped cells 24a-c are determined (S20), which are cells 22a-c, which are geometrically overlapped by the polygon 18 on the grid 22. In a practical implementation, a processing unit may calculate, for each sub-polygon of the collection of geometric objects representing the *BUFFER(G,*

*R),* the overlapped cells 24a-c, and the identifiers of the overlapped cells 24a-c may be determined.

The identifiers of the overlapped cells 24a-c may be obtained through a locality preserving mapping of the overlapped cells 24a-c, e.g. according to a Z-order curve, which may have the feature that different grid segmentations may be generated from an initial fine grid. For example, by reducing the length of a geohash of the overlapped cells 24a-c, a smaller set of overlapped cells 24a-c on a more coarse grid 22 may be obtained, which may facilitate generating multiple buffered query filters 20 for range queries at different scales, e.g. given a memory limit for the buffered query filter 20. Specifically, an optimum length of the buffered query filter 20 may depend on the total number of overlapped cells 24a-c, and the segmentation of the grid 22 may be selected based on the spatial extent of the (buffered) query object 10 in order to limit the memory required for the buffered query filter 20.

In a third step, schematically illustrated in subfigure Fig. 4(c), the identifiers of the overlapped cells 24a-c are mapped (S22) onto elements of the buffered query filter 20. In the specific example, each identifier of the overlapped cells 24a-c is hashed to determine an index of the buffered query filter 20 corresponding to the overlapped cell 24a-c, and the resulting element of the buffered query filter 20 is then set from 0 to 1, if it had not been set to 1 earlier.

Preferably, the buffered query filter 20 is a Bloom filter generated from the set of identifiers of the overlapped cells 24a-c. Generating the Bloom filter may comprise initializing an empty buffered query filter 20, with all bits set to 0 (or 1), obtaining k hashing results for each identifier of the overlapped cells 24a-c, with $k \in \{1, 2, ...\}$ and preferably $k > 2$, and setting the $k$ bits corresponding to the obtained hashing results to **1** (or 0) in the buffered query filter 20. The resulting buffered query filter 20 may constitute a fingerprint of the polygon 18 on the grid 22.

Obtaining the hashing results may comprise determining the output of at least one hash function based on the identifiers of the overlapped cells 24a-c, such as the output of a hash function based on an input of the geohash and/or geographical coordinates associated with the cell. The output of the hash function may map the identifier/overlapped cell 24a-c to an output of a fixed length, wherein the distribution of the output is preferably uniformly distributed over the possible outputs for the expected inputs.

As an example, the hash function may calculate the MurmurHash3 hash function output of two concatenated 64 bit coordinates associated with the overlapped cells 24a-c to generate a 128 bit hash function output, and k hashing results with a length of 64 bit may be generated based on the 128 bit hash function output. Then the indices of a 64 bit buffered query filter 20, which correspond to the hashing results, may be set to generate a Bloom filter for the overlapped cells 24a-c.

However, the algorithm may also use a plurality of hash function for each overlapped cell 24a-c, e.g. *k* different hash functions, and any suitable identifier of the overlapped cells 24a-c may be used. Further, the skilled person will appreciate that the buffered query filter 20 may have arbitrary length, which may be selected based on the (expected) number of overlapped cells 24a-c and a desired false positive rate, e.g. empirically and/or based on theoretical analysis. Similarly, the skilled person may select the number of hashing results *k* for each of the overlapped cells 24a-c to optimize the false positive rate in some embodiments.

The resulting buffered query filter 20 may subsequently be compared with filter objects determined for complex geometric objects G in the database *D.*

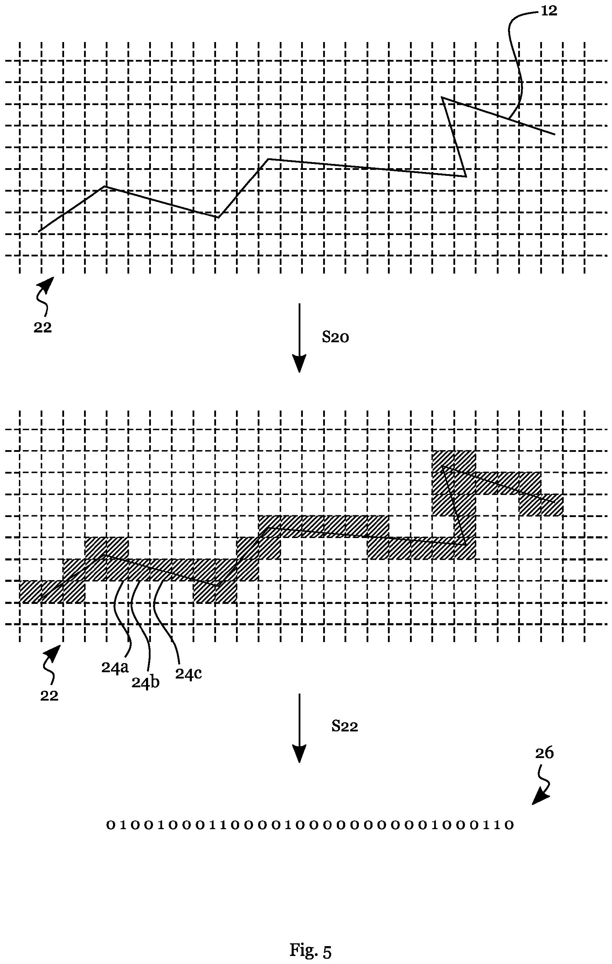

Fig. 5 schematically illustrates steps involved in generating a filter object 26 for an example trajectory 12, which overlaps with the query object 10 of Fig. 4, according to an example. The filter object 26 may be generated based on the same algorithm as the algorithm for generating the buffered query filter 20, but may omit the first step of determining a buffer for the example trajectory 12. Rather, the algorithm may determine (S20) overlapped cells 24a-c for the points and/or edges of the example trajectory 12 overlaid on the same grid 22 as the one used for determining the buffered query filter 20.

Based on the overlapped cells 24a-c of the example trajectory 12, the algorithm may determine (S22) the filter object 26 corresponding to the overlapped cells 24a-c as a fingerprint of the example trajectory 12. As in the example illustrated in Fig. 4, the algorithm may determine a Bloom filter based on the set of overlapped cells 24a, such that a filter object 26 can be generated which generally has the same length as the buffered query filter 20.

The filter function mapping the coordinates of the complex geometric objects G in the database *D* should be the same filter function that is applied to the buffered query object (e.g. the polygon 18) for the query object 10, such that the same overlapped cell 24a-c for the query object 10 and a complex geometric objects *G* in the database *D* will result in the same corresponding bits being set in the buffered query filter 20 and the filter object 26, respectively.

The filter function may include both intermediate steps (S20) and (S22) and may implement them as part of a single operation, e.g. a function of an algorithm mapping a coordinate to an element of the buffered query filter 20 or the filter objects 26 without maintaining the overlapped cells 24a-c in memory. However, in some embodiments, the overlapped cells 24a-c may be provided as an intermediate result, which may be relied upon for further range query processing, e.g. for direct comparison of the overlapped cells 24a-c of the buffered query object (e.g. the polygon 18) and of the complex geometric objects *G* in the database *D.*

The filter object 26 may be determined in advance for each of the complex geometric objects *G* in the database *D,* such that at the time of a range query, merely the buffered query filter 20 may be determined and may subsequently be compared with the pre-calculated filter objects 26 stored for the complex geometric objects *G* in the database *D.*

As part of the range query, the search algorithm may determine, whether the filter object 26 is a subset of the buffered query filter 20. Since the same overlapped cells 24a-c for the query object 10 and the complex geometric object *G* in the database *D* (e.g. the example trajectory 12) will result in the same bits being set in the buffered query filter 20 and the filter object 26, respectively, a bit set in the filter object 26 which has no correspondence in the buffered query filter 20 indicates that the complex geometric object *G* in the database *D* overlaps at least one cell 22a-c not overlapped by the buffered query object for the query object 10. Accordingly, a complex geometric object *G* in the database *D,* whose corresponding filter object 26 is not a subset of the buffered query filter 20, can be safely excluded from a range search aimed at finding complex geometric objects *G,* whose geometry elements are spaced from the query object 10 by no more than the query distance *R.*

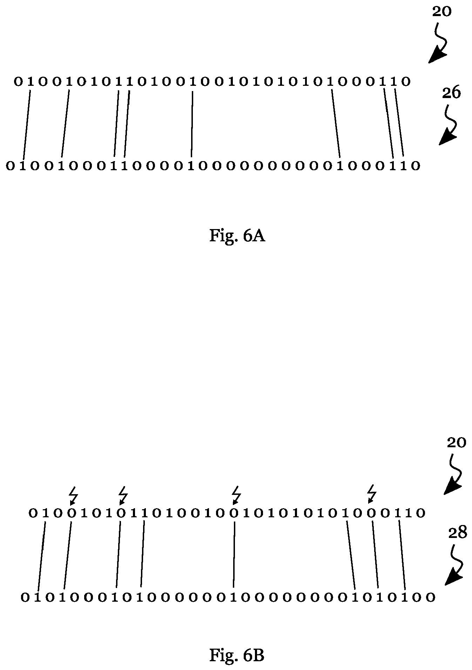

Fig. 6A, 6B schematically illustrate a subset operation for two filter objects 26a, 26b of two different complex geometric objects *G* in a database *D* with the same buffered query object 20, schematically shown in Fig. 4.

In Fig. 6A, an algorithm checks whether the filter object 26a, which is identical to the filter object 26 shown in Fig. 5, is a subset of the buffered query filter 20. In the illustrated example, the algorithm checks, for each element set (to 1) in the filter object 26a, whether the corresponding element of the buffered query filter 20, which may be located at the same index, is also set (to 1). In the example of Fig. 6A, this condition is fulfilled, such that the algorithm may sort the corresponding complex geometric object *G* into a set of data objects likely overlapping with the buffered query object of the query object 10.

Conversely, in the case of Fig. 6B, the algorithm detects that for some elements of the filter object 26b, which are set (to 1), the buffered query filter 20 contains a corresponding element which was not set (i.e. 0, as graphically highlighted by jagged arrows). Hence, the algorithm may filter out the corresponding complex geometric object *G* into a set of data objects determined as non-overlapping with the buffered query object of the query object 10, or may discard the corresponding complex geometric object *G* from a current range query.

The associated implementation may not need to compare all bits of the filter object 26, 26a, 26b and the buffered query filter 20, but may stop comparing the objects 20, 26, 26a, 26b once at least one bit of the buffered query filter 20 is detected which was not set, for a bit of the filter object 26, 26a, 26b that had been set by the filter function. The skilled person will appreciate that different implementations may be used to detect whether a filter object 26, 26a, 26b is not a subset of the buffered query filter 20, e.g. depending on the hardware architecture, and that the bit-wise comparison illustrated above is only one possible example for implementing the method.

Moreover, the method shown in Fig. 3 may be combined with other algorithms as part of a range query, such as an MBR based pruning of potential candidates, and the algorithm may only be applied to complex geometric objects *G* in the database *D,* whose MBRs intersect with an MBR of the query object 10. Further, the results of the method shown in Fig. 3 may be further refined, e.g. by repeating the method of Fig. 3 using a different filter function to compute the buffered query filter 20 and the filter objects 26, 26a, 26b, e.g. to reduce the probability of false positives, or by additional algorithms, such as a direct comparison of the query object 10 and the complex geometric objects *G* in the database *D* not filtered out previously.

For example, to find complex geometric objects *G* in the database *D* within a given Fréchet distance *R* from the query object 10, a search algorithm may compare start and end points of a trajectory, e.g. to exclude trajectories only matching a segment of the buffered query object 10, or perform exact calculation of the Fréchet distance between the query object 10 and the complex geometric objects *G* in the database *D* not filtered out previously.

The skilled person will appreciate that multiple additional embodiments can be realized depending on the requirements for the range query. For example, the database may retain buffered filter objects 26, 26a, 26b for the complex geometric objects *G* in the database *D,* reflecting supposed measurement errors during the recording of the complex geometric objects *G* in the database *D.* The buffered filter objects 26, 26a, 26b may be generated by determining buffered complex geometric objects (not shown), similar to the examples shown in Fig. 2B or 4(a), wherein the buffered geometric objects may feature a geometric footprint which is increased with respect to the respective complex geometric objects *G* in the database *D* according to measurement errors associated with the complex geometric objects *G* and/or the points and/or edges, from which the complex geometric object *G* can be constructed.

On the other hand, in some embodiments, the filter objects 26, 26a, 26b may be determined based on the raw data of the complex geometric object *G,* e.g. without interpolating a trajectory from a set of points representing the complex geometric object *G* before determining a geometric overlap of the complex geometric object *G* with the cells 22a-c of the grid 22.

For other trajectory measures including, but not limited to, the "Min-Dist" in which the distance of two trajectories is defined to be the length of the smallest edge connecting a point on the first trajectory with a point on the second, the buffered query filter can be used to convince the query engine that the intersection of the overlapped cells 24a-c of the complex geometric object *G* and the buffered query object is empty. Specifically, by determining whether the intersection between the corresponding filter object and the buffered query object is empty, it can be concluded that also the overlapped cells 24a-c of the respective original geometric objects is empty. This means that the minimum distance is larger than the buffer radius, e.g. *R,* by which the geometric footprint of the query object 10 is increased, and the database trajectory can be omitted from the range query involving a range of *R.* The skilled person will appreciate, that the ability to conclude in this way has a comparably lower probability as opposed to the first example, such that larger instances of the buffered query filter/filter objects, e.g. with a greater fraction of zeros, may be advantageous in implementations.

In the illustrated examples, the filter function should be configured, such that not all of the elements of the buffered query filter 20 are set. For example, the filter function may be configured, e.g. by selecting a suitable length of the buffered query filter 20 and/or a number of hashing results *k* per overlapped cells 24a-c, such that approximately half of the elements of the buffered query filter 20 are set, e.g. to minimize the risk of false positives when comparing to filter objects 26, 26a, 26b generated using the same filter function from complex geometric objects *G* in the database *D.*

The database *D* may be configured to generate filter objects 26, 26a, 26b for all (new) complex geometric objects *G* in the database *D.* Further, multiple filter objects 26, 26a, 26b may be determined and stored for each of the complex geometric objects *G* in the database *D,* e.g. generated using different filter functions, which may use different mappings between the overlapped cells 24a-c and the elements of the filter objects 26, 26a, 26b and/or may be based on different grids 22 or different segmentations of the same grid 22. For example, different grid segmentations may be suitable to generate buffered query filters 20 and filter objects 26, 26a, 26b and pruning complex geometric objects *G* in the database *D* for routes at different scales, e.g. traversing a continent and for routes traversing a city.

The filter objects 26, 26a, 26b may also be used in indexing of a Database *D,* e.g. by using the filter objects 26, 26a, 26b as indices of an indexing tree or generating indices using the OR operation on multiple filter objects 26, 26a, 26b of objects below each node in a tree to generate filter object summaries in the respective database D, which may be compared to a buffered query filter 20.

The skilled person will appreciate that in the preceding description, the buffered query filter 20 has been a binary filter comprising binary elements, which are set/no set based on the overlapped cells. However, in some embodiments, the elements of the buffered query filter 20 or the filter object(s) may also be implemented as counters, e.g. to probabilistically map, how often the overlapped cells 24a-c are overlapped based on the query object 10/ database objects G. The subset operation may then return whether the elements set/increased in the filter objects 26, 26a, 26b have corresponding elements of the buffered query filter 20, whose associated value is greater than a threshold, such as an initial value, e.g. 0.

The skilled person will further appreciate that the invention has been mainly illustrated using examples of trajectories in space as the complex geometric objects, but that the disclosed techniques may be applied to other composite geometric objects such as polygons, polytopes, combinations thereof or similar complex geometric objects.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

| | |
|---|---|
| 10 | query object |
| 12, 12a-d | example trajectories |
| 14 | intersection |
| 16a,b | minimum bounding rectangles (MBR) |
| 18 | polygon implementing buffered query object |
| 20 | buffered query filter |
| 22 | grid |
| 22a-c | cells of the grid |
| 24a-c | overlapped cells |
| 26, 26a, 26b | filter object |

**Claims**

1. A computer-implemented method for range query processing of complex geometric data in a database with respect to a query distance to a query object, said method comprising the steps of:

   determining a buffered query object with respect to the query object, wherein a geometric footprint of the buffered query object is increased with respect to the query object based on the query distance;

   determining a buffered query filter for the buffered query object using a filter function, wherein the filter function comprises determining a mapping of an overlapped cell of a grid to a corresponding element of the buffered query filter, the overlapped cell being overlapped by the buffered query object on the grid;

   filtering out complex geometric data objects in the database for which the filter function generates corresponding filter objects, which are not a subset of the buffered query filter and/or which have an empty intersection with the buffered query filter.

2. The method of claim 1, wherein the query object is a complex geometric object, which in particular comprises a collection of points and/or edges and preferably corresponds to a trajectory.

3. The method of claim 1 or 2, wherein the buffered query object approximates the set of points for which the smallest distance to the query object is smaller or equal to the query distance at least for a portion of the query object; and/or wherein the buffered query object geometrically approximates a sleeve around the query object, wherein the geometric boundary of the sleeve is spaced by the query distance from the query object.

4. The method of any one of the preceding claims, wherein determining the buffered query filter comprises determining a rasterized sketch of the buffered query object by determining cells of the grid which are overlapped by the buffered query object.

5. The method of any one of the preceding claims, wherein the grid comprises a grid of a geographic surface and/or a geographic volume; and/or wherein cells of the grid are associated with respective geographic locations; and/or wherein each cell of the grid is associated with a coordinate interval, in particular associated with an interval of latitude coordinates and an interval of longitude coordinates.

6. The method of any one of the preceding claims, wherein the cell of the grid is identified by a geographical identifier through a hashing function, in particular by a geocode, wherein the filter function preferably maps the geographical identifier associated with the overlapped cell or an identifier based on the geographical identifier to the element of the buffered filter function.

7. The method of any one of the preceding claims, wherein the method further comprises determining, for each cell of the grid overlapped by the buffered query object, the mapping to the corresponding element of the buffered query filter, and updating the buffered query filter based on the result of the mapping.

8. The method of claim 7, wherein updating the buffered query filter comprises setting a bit of the buffered query filter, if the bit had not been set earlier.

9. The method of any one of the preceding claims, wherein the mapping of the cell of the grid overlapped by the buffered query object to the element of the buffered query filter comprises calculating a hash function of an identifier which is associated with the cell overlapped by the buffered query object, wherein the method in particular further comprises determining an index of the buffered query filter based on the output of the hash function.

10. The method of any one of the preceding claims, wherein the mapping is non-injective and allows for collisions of the output of the mapping with respect to the expected input based on the database and/or the query object.

11. The method of any one of the preceding claims, wherein the filter function comprises determining a plurality of elements of the buffered query filter for each overlapped cell.

12. The method of any one of the preceding claims, wherein the buffered query filter is a Bloom filter for the buffered query object based on the cells of the grid overlapped by the buffered query object.

13. A database system, the database system comprising a database of complex geometric data and a processing system configured to:

   determine a buffered query object with respect to a query object, wherein a geometric footprint of the buffered query object is increased with respect to the query object based on a query distance;
   determine a buffered query filter for the query object using a filter function, wherein the filter function comprises determining a mapping of an overlapped cell of a grid to a corresponding element of the buffered query filter, the overlapped cell being overlapped by the buffered query object on the grid;
   filter out complex geometric data objects for which the filter function generates filter objects, which are not a subset of the buffered query filter and/or which have an empty intersection with the buffered query filter.

14. The system of claim 13, wherein the database is configured to generate and/or maintain filter objects for each of the complex geometric data objects held in the database using the filter function in advance.

15. A computer program comprising machine readable instructions, which when the computer program is executed by a processing unit cause the processing unit to implement a method according to any one of claims 1-12 and/or to implement a system according to claim 13 or 14.

Fig. 1A

Fig. 1B

Fig. 2A

Fig. 2B

determining a buffered query object with respect to the query object, wherein a geometric footprint of the buffered query object is increased with respect to the query object based on the query distance    ⌐S10

determining a buffered query filter for the buffered query object using a filter function, wherein the filter function comprises determining a mapping of an overlapped cell of a grid to a corresponding element of the buffered query filter, the overlapped cell being overlapped by the buffered query object on the grid    ⌐S12

filtering out complex geometric data objects in the database for which the filter function generates corresponding filter objects, which are not a subset of the buffered query filter and/or which have an empty intersection with the buffered query filter    ⌐S14

Fig. 3

(a)

R  18  10

22  22a  22b  22c

S20

(b)

18  10

22  24a  24b  24c

S22

20

(c)

0 1 0 0 1 0 1 0 1 1 0 1 0 0 1 0 0 1 0 1 0 1 0 1 0 1 0 0 0 1 1 0

Fig. 4

Fig. 5

**20**

**26**

0 1 0 0 1 0 1 0 1 1 0 1 0 0 1 0 0 1 0 1 0 1 0 1 0 1 0 0 0 1 1 0

0 1 0 0 1 0 0 0 1 1 0 0 0 0 1 0 0 0 0 0 0 0 0 0 1 0 0 0 1 1 0

Fig. 6A

**20**

**28**

0 1 0 0 1 0 1 0 1 1 0 1 0 0 1 0 0 1 0 1 0 1 0 1 0 1 0 0 0 1 1 0

0 1 0 1 0 0 0 1 0 1 0 0 0 0 0 0 1 0 0 0 0 0 0 0 1 0 1 0 1 0 0

Fig. 6B

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WERNER M.: "BACR : set similarities with lower bounds and application to spatial trajectories", PROCEEDINGS OF THE 23RD SIGSPATIAL INTERNATIONAL CONFERENCE ON ADVANCES IN GEOGRAPHIC INFORMATION SYSTEMS, [Online] 3 November 2015 (2015-11-03), pages 1-10, XP093023062, New York, NY, USA DOI: 10.1145/2820783.2820802 ISBN: 978-1-4503-3967-4 Retrieved from the Internet: URL:http://dx.doi.org/10.1145/2820783.2820 802> [retrieved on 2023-02-13] * abstract * * page 2, left-hand column, line 3 - page 2, right-hand column, line 55 * * page 3, left-hand column, line 27 - page 4, left-hand column, line 53 * * page 5, left-hand column, line 22 - page 6, left-hand column, line 16 * * page 6, right-hand column, line 21 - page 7, left-hand column, line 16 * | 1-15 | INV. G06F16/29 G06F16/9537 |
| A | US 2005/055376 A1 (XIE QINGYUN [US] ET AL) 10 March 2005 (2005-03-10) * abstract * * paragraph [0008] - paragraph [0009] * * paragraph [0046] - paragraph [0047] * * paragraph [0066] * * paragraph [0078] * | 1-15 | TECHNICAL FIELDS SEARCHED (IPC) G06F |

-----

-/--

The present search report has been drawn up for all claims

| Place of search | Date of completion of the search | Examiner |
|---|---|---|
| The Hague | 15 February 2023 | Boyadzhiev, Yavor |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt
European
Patent Office
Office européen
des brevets

# EUROPEAN SEARCH REPORT

Application Number

EP 22 19 5171

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/101402 A1 (CHIEN STEVE [US] ET AL) 4 April 2019 (2019-04-04) * abstract * * paragraph [0051] – paragraph [0055] * * paragraph [0060] – paragraph [0061] * * paragraph [0073] – paragraph [0074] * ----- | 1-15 | |
| A | Anonymous: "Geohash – Wikipedia", , 17 February 2016 (2016-02-17), pages 1-7, XP055869575, Retrieved from the Internet: URL:https://en.wikipedia.org/w/index.php?title=Geohash&oldid=705436605 [retrieved on 2021-12-06] * the whole document * ----- | 1-15 | |

| | TECHNICAL FIELDS SEARCHED (IPC) |
|---|---|

The present search report has been drawn up for all claims

| Place of search | Date of completion of the search | Examiner |
|---|---|---|
| The Hague | 15 February 2023 | Boyadzhiev, Yavor |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 19 5171

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2023

| Patent document cited in search report | Publication date | Patent family member(s) | | Publication date |
|---|---|---|---|---|
| US 2005055376 A1 | 10-03-2005 | NONE | | |
| US 2019101402 A1 | 04-04-2019 | CN | 109478184 A | 15-03-2019 |
| | | EP | 3433763 A1 | 30-01-2019 |
| | | US | 2019101402 A1 | 04-04-2019 |
| | | US | 2019360830 A1 | 28-11-2019 |
| | | WO | 2017222550 A1 | 28-12-2017 |

EPO FORM P0459